# EUROPÄISCHE PATENTSCHRIFT

(11) **EP 2 936 081 B1**
(45) Veröffentlichungstag und Bekanntmachung des Hinweises auf die Patenterteilung: **02.02.2022**
(21) Anmeldenummer: 13811437.6
(22) Anmeldetag: 17.12.2013
(51) Int. Cl.: G01F 1/684, G01F 1/692

(54) **SENSOR ZUR ERMITTLUNG EINER PROZESSGRÖSSE EINES MEDIUMS**
SENSOR FOR DETERMINING A PROCESS VALUE OF A MEDIUM
CAPTEUR POUR DÉTERMINER UNE VALEUR DE PROCESSUS D'UN MILIEU

(30) Priorität: 21.12.2012 DE 102012112845; 13.02.2013 DE 102013101403
(43) Veröffentlichungstag der Anmeldung: 28.10.2015
(73) Patentinhaber: Innovative Sensor Technology IST AG, 9642 Ebnat-Kappel (CH)
(72) Erfinder: HEPP, Christoph, 9500 Wil (CH); SCHÖNSTEIN, Thomas, Las Vegas, NV 89130 (US); KROGMANN, Florian, 9500 Wil (CH)
(74) Vertreter: Andres, Angelika Maria
(86) Internationale Anmeldenummer: PCT/EP2013/076827
(87) Internationale Veröffentlichungsnummer: WO 2014/102086

(56) Entgegenhaltungen:
- EP-A1- 2 348 292
- DE-A1- 19 941 420
- DE-C1- 19 744 228
- JP-A- 2007 017 263
- JP-A- 2011 016 173
- US-A- 5 291 781
- US-A1- 2006 053 878

## Beschreibung

Die Erfindung bezieht sich auf einen Sensor, der zur Ermittlung mindestens einer Prozessgröße eines Mediums dient. Bei der Prozessgröße handelt es sich beispielsweise um den Durchsatz eines Mediums, die Gaskonzentration eines Gases in einem Gasgemisch oder auch die thermischen Eigenschaften eines Gases.

Aus dem Stand der Technik sind bereits thermische Strömungssensoren bekannt geworden, bei denen auf einem Substrat zumindest ein Heizelement und zumindest ein Temperatursensorelement aufgebracht ist. Diese thermischen Strömungssensoren werden typischerweise auf Keramik-, Glas- oder Siliziumsubstraten hergestellt.

Ebenfalls ist aus dem Stand der Technik bekannt geworden, dass das Heizelement von dem Temperatursensorelement gut wärmetechnisch entkoppelt sein muss, umso eine möglichst sensitive, schnelle und präzise Messung des strömenden Mediums vornehmen zu können. Um diese wärmetechnische Entkopplung zu realisieren, wird die thermische Masse im Bereich der strömungssensitiven Schicht, also im Bereich des Heizelementes und des Temperatursensorelementes, möglichst gering gehalten. Hierfür werden in diesem Bereich Membrane realisiert, umso die Bulk- bzw. Substratmasse und damit einhergehend auch die thermische Masse zu reduzieren. Derartig realisierte Strömungssensoren weisen jedoch den Nachteil auf, dass relativ dicke Substrate eingesetzt werden müssen, um die mechanische Stabilität des gesamten Sensors sicherstellen zu können. Dies führt allerdings dazu, dass nach dem Einbringen dieser Strömungssensoren in die dafür vorgesehene Anwendung es zu ungünstigen Verwirbelungen kommt, welche wiederum zu unpräzisen, möglicherweise sogar gänzlich falschen Messwerten führen.

In der JP 2007 017263 A sind mehrere Ausführungsbeispiele eines thermischen Strömungssensors offenbart, welcher ein Metallsubstrat aufweist und bei welchem die Heizelemente und Temperatursensorelemente gebogen oder gewölbt sind. Die Wölbungen werden durch eine Membran realisiert, welche sich durch Spannungen in die gewünschte Form biegt.

Die JP 2011 016173 A offenbart einen thermischen Strömungssensor mit einem Siliziumsubstrat, bei welchem die Heizelemente auf einer Membran, welche über eine Kavität gespannt ist, angebracht sind.

Die DE 199 41 420 A1 offenbart einen Temperatursensor mit einem metallischen Substrat auf dem eine metallische Ätzstoppschicht und eine elektrisch isolierende Schicht aufgebracht sind. Das Substrat wird durch einen Ätzprozess bis an die Ätzstoppschicht freigeätzt, sodass im Anschluss eine Membran aus zwei Schichten - der Ätzstoppschicht und der elektrisch isolierenden Schicht - entsteht.

Die US 5 291 781 A offenbart einen thermischen Strömungssensor, welcher ein metallisches Substrat mit einer das Substrat vollständig durchdringenden Aussparung aufweist. Eine Membran bedeckt die Aussparung vollständig. Auf der Membran sind mehrere Heizelemente angeordnet, welche durch in die Membran eingefügte Schlitze thermische voneinander entkoppelt werden.

Die EP 2 348 292 A1 offenbart einen Halbleitersensor welcher ein Substrat mit einer Aussparung und eine die Aussparung bedeckende Membran aufweist, wobei die Membran zur Kompensation von thermischem Stress aus einer ersten und einer zweiten Schicht besteht. Der Sensor weist weiterhin zwei auf der Membran aufgebrachte Heizelemente auf, die jeweils teilweise über der Aussparung und über dem Substrat angeordnet sind.

Somit ist die Aufgabe der Erfindung einen Sensor, der beim Einsetzen in den Einsatzort möglichst geringe Verwirbelungen erzeugt und gleichzeitig eine hohe mechanische Stabilität aufweist, sowie ein Verfahren zur Herstellung eines solchen Sensors vorzuschlagen.

Diese Aufgabe wird durch einen Sensor gemäß Anspruch 1 und ein Verfahren gemäß Anspruch 10 gelöst.

Durch den Einsatz eines metallischen Substrates, welches als Träger dient und besonders dünn ausgeführt werden kann, vorzugsweise eine Dicke im Bereich von 50-250 µm (Mikrometern), besonders bevorzugt jedoch eine Dicke weniger als 200 µm aufweist, kann durch die Reduzierung der Bauhöhe des Sensors bei der Integration in den dafür vorgesehenen Einsatzort eine geringere Beeinträchtigung der Umgebung, bspw. Wirbelbildung, realisiert werden, umso ein noch exakteres bzw. genaueres Messergebnis mittels des Sensors zu erhalten. So kann beispielsweise in dem Fall, dass es sich um einen Strömungssensor handelt, dieser in einen Strömungskanal eingesetzt werden, ohne dass es zu wesentlichen Verwirbelungen kommt. Neben einer möglichst geringen Beeinflussung der Umgebung ist es ebenfalls wünschenswert, einen sensitiven und schnellen Sensor zu erhalten, insbesondere auch bei einem Strömungssensor. Hierzu sind unter anderem eine wärmetechnische Entkopplung der Heizstruktur von dem Temperatursensorelement sowie eine Reduzierung der thermischen Masse nötig. Zur Reduzierung der thermischen Masse wird die zumindest eine Heizstruktur auf einer Membran ausgebildet.

Hierzu wird, typischerweise mittels industriell tauglichen Ätzverfahren, das metallische Substrat derartig strukturiert, dass es eine Aussparung aufweist, durch Z die Z die erste dielektrische Schicht Z eine Membran ausbildet.

Im Sinne der vorliegenden Erfindung wird als erster Bereich im Wesentlichen der Bereich oberhalb der in das metallische Substrat eingebrachten Aussparung angesehen, wobei sich der erste Bereich insbesondere auf die Membran sowie die über der Membran angeordneten Schichten und/oder Strukturen bezieht.

Weiter ist erfindungsgemäß unter dem ersten Bereich zugeordnet zu verstehen, dass das entsprechende Element außerhalb dieses Bereiches angeordnet ist, wobei dieses Element über das Medium in Wechselwirkung mit zumindest einem Element, welches innerhalb des ersten Bereiches ausgebildet ist, steht.

Erfindungsgemäß wird ein Metall als Substrat verwendet, um so die Reduzierung der Bauhöhe des Sensors zu realisieren, da Metalle den Vorteil bieten, dass sie auch bei sehr geringen Stärken bzw. Dicken eine hohe mechanische Stabilität aufweisen und darüber hinaus industriell taugliche Ätzverfahren zu ihrer Strukturierung angewendet werden können. Weiter können metallische Substrate mit Materialien beschichtet werden, die durch den Prozess zur Strukturierung des metallischen Substrates nicht beeinflusst werden, wobei die auf das metallische Substrat in Form einer Schicht aufgebrachten Materialien wiederum mit funktionellen Metallstrukturen versehen werden können. Gegenüber den aus dem Stand der Technik bekannten thermischen Strömungssensoren, bietet die Verwendung eines Metall-Substrates den Vorteil, dass sich Metall, im Gegensatz zu keramischen Substraten, strukturieren lässt.

Um eine elektrische Verbindung zwischen der zumindest einen Heizstruktur und dem zumindest einen Temperatursensorelement zu verhindern, ist auf dem metallischen Substrat eine erste dielektrische Schicht aufgebracht. Als dielektrische Schicht kommen prinzipiell eine Vielzahl von Materialien, wie bspw. Polyimid, Parylene, weitere Kunststoffschichten, Metalloxide, Siliziumoxid, Siliziumnitrid, Siliziumcarbid, Gläser etc., einsetzbar.

Eine vorteilhafte Ausgestaltung des Sensors sieht vor, dass die erste dielektrische Schicht eine geringere thermische Leitfähigkeit als das metallische Substrat aufweist. Auf diese Weise kann die Wärmekopplung zwischen der auf der ersten dielektrischen Schicht ausgebildeten Heizstruktur und der dielektrischen Schicht erzielt werden, was wiederum dazu führt, dass eine bessere Wärmekopplung ins Medium bzw. die darüber liegenden Schichten stattfindet.

Eine weiter vorteilhafte Ausgestaltung des Sensors sieht vor, dass die Schutzschicht entweder als eine zweite dielektrische Schicht oder als ein Schichtverbund ausgebildet ist, wobei der Schichtverbund zumindest eine zweite dielektrischen Schicht und eine dritte, vorzugsweise dielektrische, Schicht umfasst. Insbesondere ist der Schichtverbund derartig ausgestaltet, dass die zweite dielektrische Schicht zumindest die mindestens eine Heizstruktur und das mindestens eine Temperatursensorelement bedeckt und die dritte, vorzugsweise dielektrische, Schicht die zweite dielektrische Schicht zumindest teilweise bedeckt. Durch die im Wesentlichen flächige Beschichtung der mindestens einen Heizstruktur und des mindestens einen Temperatursensorelementes, können Standard-Prozesse, die in der Halbleitertechnik angesiedelte und in der Mikromechanik bereits etablierte sind, verwendet werden und eine besonders kostengünstige Realisierung der Sensoren ermöglicht werden.

Alternativ ist der Schichtverbund derartig ausgestaltet, dass die zweite dielektrische Schicht zumindest die seitlichen Bereiche der zumindest einen Heizstruktur bedeckt und die Oberflächen der zumindest einen Heizstruktur und des zumindest einen Temperatursensorelementes von der dritten, vorzugsweise dielektrischen, Schicht bedeckt wird. Besonders bevorzugt ist die thermische Leitfähigkeit der dritten, vorzugweise dielektrischen, Schicht besser als die der ersten und/oder zweiten dielektrischen Schicht. Durch den selektiven Schichtaufbau, lässt sich ein besonders guter Wärmeübergang, zwischen der Heizstruktur und dem Medium, sowie dem Temperatursensorelement und dem Medium, realisieren.

Gemäß einer Weiterbildung des erfindungsgemäßen Sensors ist der thermische Ausdehnungskoeffizient der ersten dielektrischen Schicht derartig gewählt, dass eine Zugspannung auf der Membran ausgebildet wird. Durch die Zugspannung, welche auf die Membran einwirkt, kann eine Aufwölbung (engl.: "buckling") der Membran verhindert werden, die wiederum dafür sorgt, dass eine besonders glatte Membranoberfläche ausgebildet wird.

Gemäß einer weiteren Weiterbildung des erfindungsgemäßen Sensors, liegt der thermische Ausdehnungskoeffizient der zweiten dielektrischen Schicht im Bereich des thermischen Ausdehnungskoeffizienten der ersten dielektrischen Schicht, insbesondere ist die Abweichung der thermischen Ausdehnungskoeffizienten zueinander kleiner als 20%, vorzugsweise kleiner als 10%.

Eine letzte Weiterbildung des erfindungsgemäßen Sensors sieht vor, dass die erste dielektrische Schicht und die dritte, vorzugsweise dielektrische, Schicht Polyimid, Kapton und/oder Parylene und/oder die zumindest eine Heizstruktur und das zumindest eine Temperatursensorelement Platin oder Nickel oder eine Nickelverbindung umfasst.

Hinsichtlich des Verfahrens wird die Aufgabe durch ein Verfahren zum Herstellen eines Sensors wie er zumindest in einem der vorherigen Ausführungsformen beschrieben ist gelöst, wobei der Sensor in einem aus einer Vielzahl von Sensoren umfassenden Verbund während des Herstellungsprozesses zusammengehalten wird, wobei hierfür das metallische Substrat der Sensoren über jeweils mindestens einen Steg mit dem metallischen Substrat des benachbarten Sensors verbunden ist und wobei zur Vereinzelung des Sensors der mindestens eine Steg zerstört und der Sensor aus dem Verbund herausgelöst wird.

Eine vorteilhafte Ausgestaltung des Verfahrens sieht vor, dass der mindestens eine Pfad durch einen Ätzprozess mittels einer Maskierungsschicht hergestellt wird.

Die Erfindung wird anhand der nachfolgenden Zeichnungen näher erläutert. Es zeigt:
- Fig. 1:: einen Querschnitt einer Ausgestaltung eines gattungsgemäßen Sensors,
- Fig. 2:: einen Querschnitt einer weiteren Ausgestaltung des gattungsgemäßen Sensors,
- Fig. 3:: einen Querschnitt einer weiteren Ausgestaltung des gattungsgemäßen Sensors,
- Fig. 4:: eine Ausgestaltung des erfindungsgemäßen Sensors, und
- Fig. 5:: eine schematische Darstellung eines Verbundes, welcher eine Vielzahl von

Sensoren umfasst und Z zum Herstellen eines erfindungsgemäßen Sensors dient

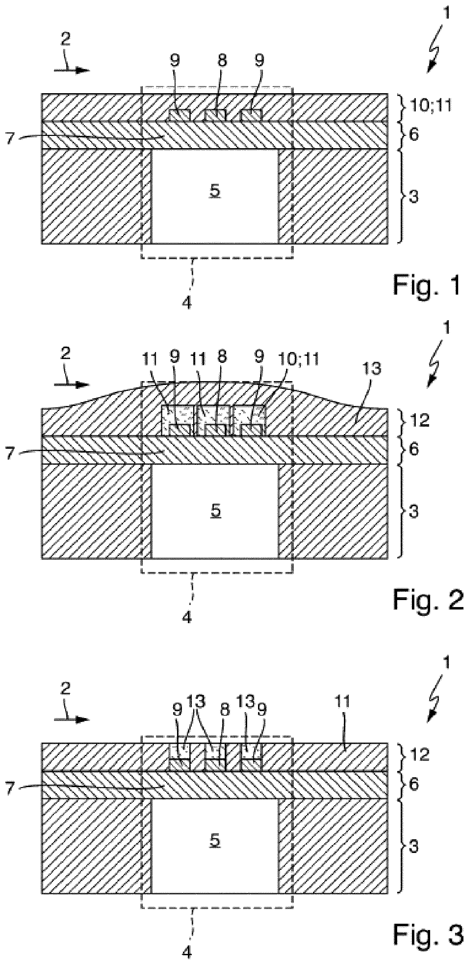

Fig. 1 zeigt einen Querschnitt einer ersten Ausgestaltung eines gattungsgemäßen Sensors 1. Hierbei weist der Sensor 1 ein metallisches Substrat 3 aus Edelstahl auf. Auf diesem metallischen Substrat 3 ist eine erste dielektrische Schicht 6, die im Wesentlichen Polyimid umfasst, aufgebracht. Mittels industriell tauglichen Fertigungsverfahren, insbesondere Ätzverfahren, ist in das metallische Substrat 3 eine Aussparung 5 eingebracht. Durch das Einbringen der Aussparung 5 in das metallische Substrat 3 bildet die erste dielektrische Schicht 6 eine Membran 7 aus. Die Aussparung 5 und die sich oberhalb der Aussparung 5 befindliche erste dielektrische Schicht 6 bilden einen ersten Bereich 4 aus. Innerhalb des ersten Bereichs 4 ist eine Heizstruktur 8 angeordnet, die auf der ersten dielektrischen Schicht 6 ausgebildet ist.

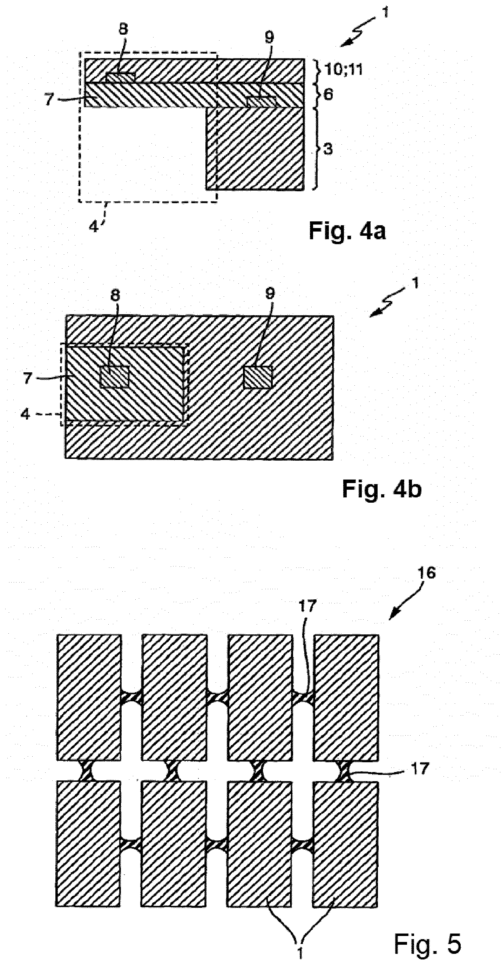

Neben der Heizstruktur 8 ist zumindest ein Temperatursensorelement 9 auf der ersten dielektrischen Schicht 6 aufgebracht. In dem in Figur 1 dargestellten Sensor sind zwei Temperatursensorelemente 9 realisiert. Diese Temperatursensorelemente 9 sind beabstandet von der Heizstruktur 8 angeordnet. Erfindungsgemäß ist (siehe Figur 4b) zumindest ein Temperatursensorelement 9 außerhalb des ersten Bereiches 4 angeordnet, lässt sich aber bzgl. der Funktion dem ersten Bereich 4 derartig zuordnen, dass eine Wechselwirkung bzw. Beziehung zwischen der innerhalb des ersten Bereichs 4 angeordneten Heizstruktur 8 und dem Temperatursensorelement 9 besteht. So kann bspw. die Temperatur eines Mediums 2, welches von der innerhalb des ersten Bereichs 4 angeordneten Heizstruktur 8 erhitzt wird mittels des außerhalb des ersten Bereiches 4 angeordneten Temperatursensorelementes 9 erfasst werden.

Sowohl die Heizstruktur 8 auch die Temperatursensorelemente 9 sind aus Platin ausgebildet. Um eine elektrische Kopplung zwischen der Heizstruktur 8 und den Temperatursensorelementen 9 über das Medium 2 zu verhindern, ist zumindest eine Schutzschicht 10 vorgesehen, die die Heizstruktur 8 und die beiden Temperatursensorelemente 9 bedeckt. In der in Figur 1 dargestellten Ausgestaltung des gattungsgemäßen Sensors 1 umfasst die Schutzschicht lediglich eine zweite, vorzugsweise dielektrische, Schicht 11, welche flächig aufgebracht ist.

Alternativ kann die Heizerstruktur auch aus einem Material mit geringem Temperatur Koeffizienten des Widerstands (TCR), wie z.B. Nickel-Chrom oder Nickel-Chrom mit weiteren Zusätzen zum gezielten Einstellen des TCRs bestehen. Weiterhin kann die Heizstruktur 8 und das Temperatursensorelemente 9 aus jedem Metall oder Metallverbindung bestehen, die einen TCR aufweist, z.B. Tantal oder Nickel.

Ferner ist das Material der ersten dielektrischen Schicht 6 derartig gewählt, dass aufgrund des thermischen Ausdehnungskoeffizienten es zu einer Zugspannung auf der Membran 7, zumindest nach der vollständigen Prozessierung bzw. Herstellung des Sensors 1, kommt. Dies bietet den Vorteil, dass eine nicht gewölbte Form der Membran 7 erzielt wird, die dafür sorgt, dass die Membran 7 eine möglichst glatte Oberfläche ausbildet.

Figur 2 und Figur 3 zeigen Querschnitte weiterer Ausgestaltungen des gattungsgemäßen Sensors 1, wobei die Ausgestaltung im Wesentlichen gemäß dem in Figur 1 gezeigten Sensor 1 entspricht, lediglich die Schutzschicht 10 ist in vorteilhafter Weise unterschiedlich ausgebildet. In Figur 2 ist die zumindest eine Schutzschicht 10 als ein Schichtverbund 11, 13 ausgestaltet, welcher eine zweite und dritte Schicht 11, 13 umfasst, wobei die zweite und dritte Schicht 11, 13 vorzugsweise ebenfalls dielektrische Schichten darstellen. Die in Figur 2 dargestellte Ausgestaltung bietet den Vorteil, dass durch den Einsatz eines Schichtverbundes 11, 13, welcher zumindest aus einer zweiten und einer dritten Schicht 11, 13 besteht, sich der Schichtverbund entsprechend des Mediums 2 bzw. der Aggressivität des Mediums 2 einstellen lässt und sich die Heizstruktur 8 und/oder Temperatursensorelement 9 somit spezifisch vor dem jeweiligen Medium 2 schützen lassen.

Ebenfalls hat es sich als vorteilhaft erwiesen das Material der zweiten Schicht 11 derartig zu wählen, dass der thermische Ausdehnungskoeffizient der zweiten, vorzugsweise dielektrischen, Schicht 11 im Bereich des thermischen Ausdehnungskoeffizienten der ersten dielektrischen Schicht 6 liegt.

Die zweite Schicht 11, welche vorzugsweise eine dielektrische Schicht darstellt, ist eine Metall-Oxid-Schicht, die zumindest die Heizstruktur 8 und das Temperatursensorelement 9 lokal bedeckt. Diese zweite Schicht 11 ist wiederum mit einer flächig aufgebrachten dritten Schicht 13, vorzugsweise ebenfalls einer dielektrischen Schicht, bspw. einem Polymer wie Parylene bedeckt.

Auf diese Weise lässt sich, wie bereits gesagt, die Heizstruktur 8 und/oder das Temperatursensorelement 9 vor spezifischen Medien, insbesondere aggressiven Medien 2, schützen. Aggressive Medien sind z.B. saure oder basische Medien oder auch kondensierender Luftfeuchtigkeit.

Durch das Einsetzen eines Schichtverbundes 11, 13 mit mindestens zwei Schichten, können zwar die Heizstruktur 8 und/oder das Temperatursensorelement 9 vor spezifischen Medien 2 geschützt werden, allerdings weist diese Methode den Nachteil auf, dass eine geringere Wärmekopplung zwischen der Heizstruktur 8 und dem Medium 2 bzw. dem Temperatursensorelement 9 und dem Medium 2 entsteht und somit eine schnelle Ansprechzeit des Sensors 1 nur schwer zu realisieren ist.

Aufgrund dessen ist in Figur 3 eine weitere alternative Ausgestaltung des gattungsgemäßen Sensors 1 dargestellt, bei dem der Schichtverbund derartig ausgestaltet ist, dass die zweite, vorzugsweise dielektrische, Schicht 11, flächig auf die erste dielektrische Schicht 6 aufgebracht ist, wobei die zweite Schicht 11 zumindest die seitlichen Bereiche bzw. Seitenwände der zumindest einen Heizstruktur 8 und/oder des Temperatursensorelementes 9 bedeckt und die Oberflächen, also die dem Medium 2 zugewandte Seite bzw. Fläche, der zumindest einen Heizstruktur 8 und des zumindest einen Temperatursensorelementes 9 von einer dritten, vorzugsweise wiederum dielektrischen, Schicht 13 bedeckt sind. Hierbei ist insbesondere die thermische Leitfähigkeit der dritten Schicht 13 besser als die der ersten und/oder zweiten Schicht 6, 11. Auf diese Weise kann eine verbesserte Wärmekopplung zwischen dem Medium 2 und der Heizstruktur 8 sowie dem Temperatursensorelement 9 und dem Medium 2 mittels der dritten Schicht 13 realisiert werden, um so eine möglichst schnelle Ansprechzeit des Sensors 1 zu erzielen.

Die in den Figuren 1 bis 3 gezeigten gattungsgemäßen Sensoren entsprechen nicht dem erfindungsgemäßen Sensor.

Fig. 4 zeigt eine Ausgestaltung des erfindungsgemäßen Sensors 1. Hierbei zeigt Figur 4 a) eine Seitenansicht, die jedoch fehlerhaft ist und dem erfindungsgemäßen Sensor nicht zugerechnet wird. Figur 4 b) zeigt eine Draufsicht des erfindungsgemäßen Sensors 1. Hierbei ist die Aussparung 5 im Randbereich des metallischen Substrates 3 des Sensors 1 eingebracht.

Auf dem metallischen Substrat 3, welches aus Edelstahl ausgebildet ist, ist eine dielektrische Schicht 6 aufgebracht die im ersten Bereich 4 der Aussparung 5 eine Membran 7 ausbildet, wobei sich der erste Bereich 4 wiederum auf die Membran 7 sowie die über der Membran 7 angeordneten Schichten und/oder Elemente bezieht. Innerhalb dieses ersten Bereiches 4 ist die zumindest eine Heizstruktur 8 zur Erhitzung des Mediums 2 ausgebildet.

Das Temperatursensorelement 9 ist außerhalb des ersten Bereichs 4 angeordnet, lässt sich aber dem ersten Bereich 4 insofern zuordnen, dass es mit Elementen und/oder Strukturen, die innerhalb des ersten Bereichs 4 angeordnet sind, in der Form wechselwirkt, dass ein Medium 2, insbesondere ein strömendes Medium 2 an der innerhalb des ersten Bereichs 4 liegenden Heizstruktur 8 erhitzt wird und die Temperatur von dem Medium 2 an dem, außerhalb des ersten Bereichs 4 liegenden, Temperatursensorelement 9 erfasst wird.

Ferner ist eine Schutzschicht 10, welche zumindest die mindestens eine Heizstruktur 8 und das mindestens eine Temperatursensorelement 9 bedeckt, vorgesehen. Diese Schutzschicht 10 ist in dem in Figur 4a dargestellten Sensor in Form einer einzigen zweiten Schicht 11 ausgestaltet. Denkbar ist es jedoch auch, insbesondere für spezifische Anwendungsfelder des Sensors 1, die Schutzschicht 10 als Schichtverbund 12, welcher zumindest zwei weitere Schichten umfasst, auszubilden, wobei die zwei weiteren Schichten vorzugsweise als dielektrische Schichten ausgebildet sind. Fig. 5 zeigt eine schematische Darstellung eines Verbundes 16, welcher eine Vielzahl von Sensoren 1 umfasst und zum Herstellen eines erfindungsgemäßen Sensors 1 dient. Um einen miniaturisierten Sensor 1, wie er oben beschrieben ist, einfacher prozessieren bzw. herstellen zu können, wird eine Vielzahl von Sensoren 1 über einen Verbund 16 während des Herstellungsprozesses zusammengehalten, wobei hierfür das metallische Substrat 3 der Sensoren 1 über jeweils mindestens einen Steg 17 mit dem metallischen Substrat 3 des benachbarten Sensors 1 verbunden ist und wobei zur Vereinzelung eines Sensors 1 die an diesen Sensor angrenzenden Stege 17 zerstört werden und der Sensor 1 somit aus dem Verbund 16 herausgelöst wird.

Ferner ist vorgesehen, dass der mindestens eine Pfad 17 durch einen Ätzprozess mittels einer Maskierungsschicht hergestellt wird.

### Bezugszeichenliste

- 1: Sensor
- 2: Medium
- 3: Metallisches Substrat
- 4: Erster Bereich des metallischen Substrates
- 5: Aussparung
- 6: Erste dielektrische Schicht
- 7: Ausgebildete Membran
- 8: Heizstruktur
- 9: Temperatursensorelement
- 10: Schutzschicht
- 11: Zweite, vorzugsweise dielektrische, Schicht
- 12: Schichtverbund
- 13: Dritte, vorzugsweise dielektrische, Schicht
- 14: Erster Abschnitt
- 15: Zweiter Abschnitt
- 16: Verbund
- 17: Steg

## Patentansprüche

1. Sensor (1) zur Ermittlung mindestens einer Prozessgröße eines Mediums (2) mindestens umfassend:
- ein metallisches Substrat (3), welches zumindest in einem ersten Bereich (4) eine Aussparung (5) aufweist; und
- eine erste dielektrische Schicht (6), welche in dem ersten Bereich (4) eine Membran (7) ausbildet, wobei die Membran (7) die Aussparung (5) vollständig bedeckt, und wobei ausschließlich die dielektrische Schicht (6) die Membran (7) ausbildet; und
- zumindest eine Heizstruktur (8), die in dem ersten Bereich (4) auf der als Membran (7) ausgebildeten ersten dielektrischen Schicht (6) angeordnet ist, wobei die Heizstruktur (8) das Medium (2) erhitzt; und
- zumindest ein dem ersten Bereich zugeordnetes Temperatursensorelement (9), welches beabstandet von der Heizstruktur (8) und außerhalb des ersten Bereichs (4) auf der ersten dielektrischen Schicht (6) angeordnet ist und die Temperatur des an der Heizstruktur (8) erhitzten Mediums (2) erfasst; und
- zumindest eine Schutzschicht (10), welche zumindest die mindestens eine Heizstruktur (8) und das mindestens eine Temperatursensorelement (9) bedeckt.

2. Sensor nach einem oder mehreren der vorhergehenden Ansprüche, wobei die erste dielektrische Schicht (6) eine geringere thermische Leitfähigkeit als das metallische Substrat (3) aufweist.

3. Sensor nach einem oder mehreren der vorhergehenden Ansprüche, wobei die Schutzschicht (10) entweder als eine zweite dielektrische Schicht (11) oder als ein Schichtverbund (12) ausgebildet ist, wobei der Schichtverbund (12) zumindest eine zweite dielektrischen Schicht (11) und eine dritte, vorzugsweise dielektrische, Schicht (13) umfasst.

4. Sensor nach Anspruch 3, wobei der Schichtverbund (12) derartig ausgestaltet ist, dass die zweite dielektrische Schicht (11) zumindest die mindestens eine Heizstruktur (8) und das mindestens eine Temperatursensorelement (9) bedeckt und die dritte, vorzugsweise dielektrische, Schicht (13) die zweite dielektrische Schicht (11) zumindest teilweise bedeckt.

5. Sensor nach Anspruch 3, wobei der Schichtverbund (12) derartig ausgestaltet ist, dass die zweite dielektrische Schicht (11) zumindest die seitlichen Bereiche der zumindest einen Heizstruktur (8) und/oder des Temperatursensorelementes bedeckt sind und die Oberflächen der zumindest einen Heizstruktur (8) und des zumindest einen Temperatursensorelementes (9) von der dritten, vorzugsweise dielektrischen, Schicht (13) bedeckt sind.

6. Sensor nach Anspruch 5, wobei die thermische Leitfähigkeit der dritten, vorzugweise dielektrischen, Schicht (13) höher ist als die der ersten und/oder zweiten dielektrischen Schicht (6, 10).

7. Sensor nach einem oder mehreren der vorhergehenden Ansprüche, wobei der thermische Ausdehnungskoeffizient der ersten dielektrischen Schicht (6) derartig gewählt ist, dass eine Zugspannung auf der Membran (7) ausgebildet wird.

8. Sensor nach einem oder mehreren der vorhergehenden Ansprüche, wobei der thermische Ausdehnungskoeffizient der zweiten dielektrischen Schicht (10) im Bereich des thermischen Ausdehnungskoeffizienten der ersten dielektrischen Schicht (6) liegt.

9. Sensor nach einem oder mehreren der vorhergehenden Ansprüche, wobei die erste dielektrische Schicht (6) und die dritte, vorzugsweise dielektrische, Schicht Polyimid und/oder die zumindest eine Heizstruktur (8) und das zumindest eine Temperatursensorelement (9) Platin oder Nickel oder eine Nickelverbindung umfasst.

10. Verfahren zum Herstellen eines Sensors (1) wie er zumindest in einem der Ansprüche 1 bis 9 beschrieben ist, wobei der Sensor (1) in einem aus einer Vielzahl von Sensoren (1) umfassenden Verbund (16) während des Herstellungsprozesses zusammengehalten wird, wobei hierfür das metallische Substrat (3) der Sensoren (1) über jeweils mindestens einen Steg (17) mit dem metallischen Substrat (3) des benachbarten Sensors (1) verbunden ist und wobei zur Vereinzelung des Sensors (1) der mindestens eine Steg (17) zerstört und der Sensor (1) aus dem Verbund (16) herausgelöst wird.

11. Verfahren nach Anspruch 10, wobei der mindestens eine Pfad (17) durch einen Ätzprozess mittels einer Maskierungsschicht hergestellt wird.

## Claims

1. Sensor (1) designed to determine at least one process variable of a medium (2), said sensor comprising at least:
- a metal substrate (3), which has a recess (5) at least in a first area (4); and
- a first dielectric layer (6), which forms a membrane (7) in the first area (4), wherein the membrane (7) completely covers the recess (5), and wherein only the dielectric layer (6) forms the membrane (7); and
- at least a heating structure (8) which is arranged in the first area (4) on the first dielectric layer (6) which is formed as a membrane (7), wherein the heating structure (8) heats the medium (2); and
- at least a temperature sensor element (9) assigned to the first area, wherein said sensor element is arranged at a distance from the heating structure (8) and outside the first area (4) on the first dielectric layer (6) and measures the temperature of the medium (2) heated at the heating structure (8); and
- at least a protective layer (10) at least covering the at least one heating structure (8) and the at least one temperature sensor element (9).

2. Sensor as claimed in one or more of the previous claims, wherein the first dielectric layer (6) has a lower thermal conductivity than the metal substrate (3).

3. Sensor as claimed in one or more of the previous claims, wherein the protective layer (10) is formed either as a second dielectric layer (11), or as a composite of layers (12), wherein the composite of layers (12) comprises at least a second dielectric layer (11) and a third, preferably dielectric, layer (13).

4. Sensor as claimed in Claim 3, wherein the composite of layers (12) is configured in such a way that the second dielectric layer (11) at least covers the at least one heating structure (8) and the at least one temperature sensor element (9) and the third layer (13), preferably dielectric, at least partially covers the second dielectric layer (11).

5. Sensor as claimed in Claim 3, wherein the composite of layers (12) is configured in such a way that the second dielectric layer (11) covers at least the side areas of the at least one heating structure (8) and/or of the temperature sensor element and the surfaces of the at least one heating structure (8) and of the at least one temperature sensor element (9) are covered by the third, preferably dielectric, layer (13).

6. Sensor as claimed in Claim 5, wherein the thermal conductivity of the third, preferably dielectric, layer (13) is greater than that of the first and/or second dielectric layer (6, 10).

7. Sensor as claimed in one or more of the previous claims, wherein the thermal expansion coefficient of the first dielectric layer (6) is selected in such a way that a tensile stress is formed on the membrane (7).

8. Sensor as claimed in one or more of the previous claims, wherein the thermal expansion coefficient of the second dielectric layer (10) is in the range of the thermal expansion coefficient of the first dielectric layer (6).

9. Sensor as claimed in one or more of the previous claims, wherein the first dielectric layer (6) and the, preferably dielectric, third layer comprises polyimide and/or the at least one heating structure (8) and the at least one temperature sensor element (9) comprises platinum or nickel or a nickel compound.

10. Procedure to manufacture a sensor (1) as described at least in one of the Claims 1 to 9, wherein the sensor (1) is held in a group (16) comprising multiple sensors (1) during the manufacturing process, wherein the metal substrate (3) of the sensors (1) is connected to the metal substrate (3) of the neighboring sensor (1) via at least a bar (17), and the at least one bar (17) is destroyed to separate the sensor (1), and the sensor (1) is detached from the group (16).

11. Procedure as claimed in Claim 10, wherein the at least one bar (17) is produced by an etching process using a masking layer.

## Revendications

1. Capteur (1) destiné à la détermination d'au moins une grandeur process d'un produit (2), lequel capteur comprend au moins :
- un substrat métallique (3), lequel substrat présente un évidement (5) au moins dans une première zone (4) ; et
- une première couche diélectrique (6), laquelle couche forme une membrane (7) dans la première zone (4), la membrane (7) recouvrant complètement l'évidement (5), et seule la couche diélectrique (6) formant la membrane (7) ; et
- au moins une structure chauffante (8) qui est disposée dans la première zone (4) sur la première couche diélectrique (6) formée comme une membrane (7), la structure chauffante (8) chauffant le produit (2) ; et
- au moins un élément capteur de température (9) affecté à la première zone, lequel élément capteur est disposé à distance de la structure chauffante (8) et à l'extérieur de la première zone (4) sur la première couche diélectrique (6) et mesure la température du produit (2) chauffé sur la structure de chauffante (8) ; et
- au moins une couche protectrice (10) recouvrant au moins l'au moins une structure chauffante (8) et l'au moins un élément capteur de température (9).

2. Capteur selon l'une ou plusieurs des revendications précédentes, pour lequel la première couche diélectrique (6) présente une conductivité thermique inférieure à celle du substrat métallique (3).

3. Capteur selon l'une ou plusieurs des revendications précédentes, pour lequel la couche de protection (10) est formée soit comme une deuxième couche diélectrique (11), soit comme un composite de couches (12), le composite de couches (12) comprenant au moins une deuxième couche diélectrique (11) et une troisième couche (13), de préférence diélectrique.

4. Capteur selon la revendication 3, pour lequel le composite de couches (12) est configuré de telle sorte que la deuxième couche diélectrique (11) recouvre au moins l'au moins une structure chauffante (8) et l'au moins un élément capteur de température (9) et la troisième couche (13), de préférence diélectrique, recouvre au moins partiellement la deuxième couche diélectrique (11).

5. Capteur selon la revendication 3, pour lequel le composite de couches (12) est configuré de telle sorte que la deuxième couche diélectrique (11) recouvre au moins les zones latérales de l'au moins une structure chauffante (8) et/ou de l'élément capteur de température et que les surfaces de l'au moins une structure chauffante (8) et de l'au moins un élément capteur de température (9) sont recouvertes par la troisième couche (13), de préférence diélectrique.

6. Capteur selon la revendication 5, pour lequel la conductivité thermique de la troisième couche (13), de préférence diélectrique, est supérieure à celle de la première et/ou de la deuxième couche diélectrique (6, 10).

7. Capteur selon l'une ou plusieurs des revendications précédentes, pour lequel le coefficient de dilatation thermique de la première couche diélectrique (6) est choisi de telle sorte qu'une contrainte de traction est formée sur la membrane (7).

8. Capteur selon l'une ou plusieurs des revendications précédentes, pour lequel le coefficient de dilatation thermique de la deuxième couche diélectrique (10) est dans la plage du coefficient de dilatation thermique de la première couche diélectrique (6).

9. Capteur selon l'une ou plusieurs des revendications précédentes, pour lequel la première couche diélectrique (6) et la troisième couche, de préférence diélectrique, comprennent du polyimide et/ou l'au moins une structure chauffante (8) et l'au moins un élément capteur de température (9) comprennent du platine ou du nickel ou un composé de nickel.

10. Procédé destiné à la fabrication d'un capteur (1) tel que décrit dans au moins une des revendications 1 à 9, pour lequel le capteur (1) est maintenu ensemble dans un réseau (16) comprenant une pluralité de capteurs (1) pendant le processus de fabrication, le substrat métallique (3) des capteurs (1) étant relié à cet effet par au moins une nervure (17) au substrat métallique (3) du capteur (1) voisin, et l'au moins une nervure (17) étant détruite pour séparer le capteur (1), puis le capteur (1) est détaché du réseau (16).

11. Procédé selon la revendication 10, pour lequel l'au moins une nervure (17) est produite par un procédé de gravure au moyen d'une couche de masquage.
